# EUROPÄISCHE PATENTSCHRIFT

(11) **EP 4 479 272 B1**
(45) Veröffentlichungstag und Bekanntmachung des Hinweises auf die Patenterteilung: **18.02.2026**
(21) Anmeldenummer: 23702790.9
(22) Anmeldetag: 31.01.2023
(51) Int. Cl.: B60Q 1/068

(54) **SCHEINWERFER FÜR FAHRZEUGE**
VEHICLE HEADLAMP
PROJECTEUR DE VÉHICULE

(30) Priorität: 17.02.2022 DE 102022103747; 10.03.2022 DE 102022105670
(43) Veröffentlichungstag der Anmeldung: 25.12.2024
(73) Patentinhaber: HELLA GmbH & Co. KGaA, 59552 Lippstadt (DE)
(72) Erfinder: SCHÖNERT, Oliver, 59757 Arnsberg (DE)
(86) Internationale Anmeldenummer: PCT/EP2023/052317
(87) Internationale Veröffentlichungsnummer: WO 2023/156190

(56) Entgegenhaltungen:
- EP-A1- 0 580 496
- EP-B1- 3 115 621
- DE-A1- 10 309 087
- FR-A1- 2 643 027
- US-A- 4 188 655
- US-A- 5 743 618

## Beschreibung

Die Erfindung betrifft einen Scheinwerfer für Fahrzeuge nach dem Oberbegriff des Patentanspruchs 1.

Aus der DE 10 2007 028 988 A1 ist ein Scheinwerfer für Fahrzeuge mit einem Gehäuse bekannt, in dem eine Lichtquelle und eine Optikeinheit angeordnet sind zur Erzeugung einer vorgegebenen Lichtverteilung. Die Optikeinheit ist mittels einer Einstelleinrichtung relativ zu dem Gehäuse verstellbar bzw. einstellbar angeordnet, damit die Lichtverteilung in der Montagestellung des Scheinwerfers gegebenenfalls eine vorgegebene Hell-/Dunkelgrenze aufweist. Die Einstelleinrichtung umfasst eine Spindelschraube, die zum einen über ein Kugelgelenk drehbar mit dem Gehäuse oder einem an dem Gehäuse befestigten Tragrahmen gekoppelt ist. Zum anderen ist die Spindelschraube linear verschieblich zu einem Befestigungsteil der Optikeinheit gelagert, so dass um eine ein Verschwenken der Optikeinheit relativ zu dem Gehäuse horizontale oder vertikale Achse gewährleistet ist. Die Spindelschraube weist einen Gewindeschaft auf, der in einem Aufnahmeteil geführt gelagert ist, wobei das Aufnahmeteil einsteckbar in das fest mit der Optikeinheit verbundenen Befestigungsteil ausgebildet ist. Da das Aufnahmeteil einstückig mit dem Gehäuse und das Befestigungsteil einstückig mit der Optikeinheit verbunden sind, ist der Herstellungsaufwand relativ groß.

Aus der DE 103 09 087 A1 ist ein Scheinwerfer für Fahrzeuge mit einer Einstelleinrichtung bekannt, die ein Aufnahmeteil für eine Spindelschraube vorsieht. Dieses Aufnahmeteil weist nicht federnde Befestigungsmittel auf zur Befestigung mit einem Befestigungsteil mittels eines Bajonettverschlusses.

Aus der EP 0 580 496 A1 ist ein Scheinwerfer mit einer Einstelleinrichtung bekannt, bei der eine Spindelschraube in einem starr ausgebildeten Aufnahmeteil längs verschieblich gelagert ist.

Aus der FR 2 643 027 A1 ist ein Scheinwerfer mit einer Einstelleinrichtung bekannt, bei der eine Spindelschraube längs verschieblich in einem Rastkörper angeordnet ist. Der Rastkörper verfügt über Spreizelemente, die in der Montagestellung innenseitig an einem Befestigungsteil des Gehäuses anliegen. Außenseitig an dem Rastkörper angeordnete Rastelemente sind zwar federnd ausgebildet, wirken jedoch mit Anschlägen des Befestigungsteils zusammen, so dass eine rastende Einstellung in Umfangsrichtung bewirkt wird.

Aus der EP 3 115 621 B1 ist ein Scheinwerfer für Fahrzeuge mit einem Gehäuse bekannt, in dem eine Lichtquelle und eine Optikeinheit zur Erzeugung einer vorgegebenen Lichtverteilung angeordnet sind. Ferner ist eine Einstelleinrichtung vorgesehen mit einer Spindelschraube, die über ein Kugelgelenk mit dem Gehäuse des Scheinwerfers gekoppelt ist. Die Spindelschraube steht mit einem Aufnahmeteil in Gewindeeingriff, welches rastend einsteckbar in ein Befestigungsteil der Optikeinheit ausgeführt ist. Das Aufnahmeteil ist als ein Rastkörper ausgebildet, der eine Mehrzahl von Spreizelementen aufweist, die in der Montagestellung an der Innenwandung des Befestigungsteils anliegen.

Aufgabe der vorliegenden Erfindung ist es, einen Scheinwerfer für Fahrzeuge mit einer Einstelleinrichtung zur relativen Verstellung einer Optikeinheit zu einem Gehäuse des Scheinwerfers in einer Anbaulage derart weiterzubilden, dass der Herstellungsaufwand weiter reduziert und eine Rastverbindung verbessert wird.

Zur Lösung dieser Aufgabe weist die Erfindung die Merkmale des Patentanspruchs 1 auf.

Nach der Erfindung ist das Aufnahmeteil als ein Rastkörper ausgebildet, der als loser Körper hergestellt und bei der Montage der Optikeinheit an dem Scheinwerfergehäuse lagesicher mit einem Befestigungsteil der Optikeinheit rastend verbunden wird. Der Rastkörper weist ein Basiselement mit einer Bohrung für den Eintritt einer Spindelschraube einerseits und von dieser Basisseite abragende Rast- und/oder Befestigungsmittel andererseits auf. Die Rastmittel dienen zur rastenden Verbindung des Rastkörpers mit dem Befestigungsteil. Das Basiselement weist eine Anschlagfläche auf, die in der Montagestellung an einer Stirnseite des Befestigungsteils anliegt. Die Rastmittel sind derart ausgebildet, dass in dieser Montagestellung der Rastkörper lagesicher und ohne Spiel sowie schwingungs- und vibrationsfest mit dem Befestigungsteil verbunden ist. Vorteilhaft kann die Montage ohne Werkzeug erfolgen, wobei in einem ersten Schritt der Rastkörper rastend an dem Befestigungsteil befestigt wird und in einem zweiten Schritt eine Spindelschraube in die Bohrung des Rastkörpers eingesetzt wird. Nach der Erfindung weist der Rastkörper als Rastmittel eine Anzahl von Spreizelementen auf, die von einer Rückseite des Basiselementes des Rastkörpers abragen. Die Spreizelemente sind federnd mit dem Basiselement verbunden, so dass sie sich (federnd) quer zur Schwenkachse bzw. quer zur Spindelschraube bewegen lassen. In der Montagestellung liegen die Spreizelemente (federnd) an einer Innenwandung des Befestigungsteils an. Sobald sich der Rastkörper in der Montagestellung befindet, kann durch Einsetzen der Spindelschraube ein Gewinde in die Spreizelemente eingeschnitten werden. Die Spindelschraube ist dann in dem Rastkörper linear geführt gelagert unter Bildung eines Gewindeeingriffs, wobei die Spreizelemente gegen die Innenwandung des Befestigungsteils gedrückt werden. Nach der Erfindung ragen von einer Rückseite des Basiselementes des Rastkörpers als Rastmittel ein federndes Rastelement ab, das in der Montagestellung rastend mit an einer Außenwandung des Befestigungsteils abragenden Rastnase rastend verbunden ist. Die rastende Verbindung zwischen dem Rastelement des Rastkörpers und der Rastnase des Befestigungsteils ermöglicht somit eine Festlegung des Rastkörpers in Richtung der Achse des Rastkörpers bzw. des Befestigungsteils bzw. der Spindelschraube.

Nach einer Weiterbildung der Erfindung ragt rückseitig des Basiselementes des Rastkörpers als Rast-/Befestigungsmittel ein Befestigungssteg ab, der in der Montagestellung in einer taschenförmigen Aufnahme des Befestigungsteils eingreift. Vorteilhaft ist hierdurch eine zusätzliche Klemmung zwischen dem Rastkörper und dem Befestigungsteil gegeben, was die Vibrationsfestigkeit weiter erhöht.

Nach einer Weiterbildung der Erfindung kann der Befestigungssteg in der taschenförmigen Aufnahme klemmend und/oder verklebend angeordnet sein. Vorteilhaft kann die innige Verbindung zwischen dem Rastkörper und dem Befestigungsteil hierdurch weiter erhöht werden.

Nach einer Weiterbildung der Erfindung weist das Basiselement des Rastkörpers eine in der Ebene des Basiselementes verlaufende Ausbeulung auf, die in der Montagestellung an einem Anschlagbacken des Befestigungsteils anliegt. Auf diese Weise wird eine Verdrehsicherung des Rastkörpers an dem Befestigungsteil ermöglicht.

Nach einer Weiterbildung der Erfindung weist das Befestigungsteil einen Hohlzylinderabschnitt auf, an dessen Innenwandung die Spreizelemente des Rastkörpers anliegen. Vorzugsweise weist die Innenwandung Stützrippen auf, so dass bei der Montage des Rastkörpers eine Führung gegeben ist.

Nach einer Weiterbildung der Erfindung weist die Innenwandung des Hohlzylinderabschnitts des Befestigungsteils in einem dem Basiselement abgewandten Endbereich eine Durchmesservergrößerung auf, so dass hierdurch ein Ausziehschutz gewährleistet für den Rastkörper. Ein unerwünschtes Herausziehen des Rastkörpers aus dem Befestigungsteil wird somit entgegengewirkt.

Nach einer Weiterbildung der Erfindung verlaufen die Spreizelemente jeweils in einem Umfangswinkel von kleiner als 90°, so dass mindestens vier Spreizelemente je Rastkörper vorgesehen sind. Hierdurch wird ein sicheres Gewindeeinschneiden der Spreizelemente gewährleistet.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Fig. 1: eine perspektivische Vorderansicht eines Rastkörpers der Einstelleinrichtung kurz bevor er in eine Bohrung eines Befestigungsteils einer Optikeinheit des Scheinwerfers eingesetzt wird,
- Fig. 2: eine perspektivische Rückansicht des Rastkörpers vor Einsetzen desselben in die Bohrung des Befestigungsteils gemäß Figur 1,
- Fig. 3: eine perspektivische Rückansicht in der Montagestellung des Rastkörpers, in der er an dem Befestigungsteil fixiert ist,
- Fig. 4: eine perspektivische Rückansicht des eingesetzten Rastkörpers an dem Befestigungsteil, wobei eine Spindelschraube in Spreizelementen des Rastkörpers eingeschnitten worden ist, so dass die Spindelschraube linear verschieblich zu dem Rastkörper gelagert ist und
- Fig. 5: eine Rückansicht der Optikeinheit mit einem Kühlkörper, wobei die Optikeinheit an Eckbereichen derselben über die Einstellvorrichtung linear verschieblich mit einem Tragrahmen des Scheinwerfers verbunden ist.

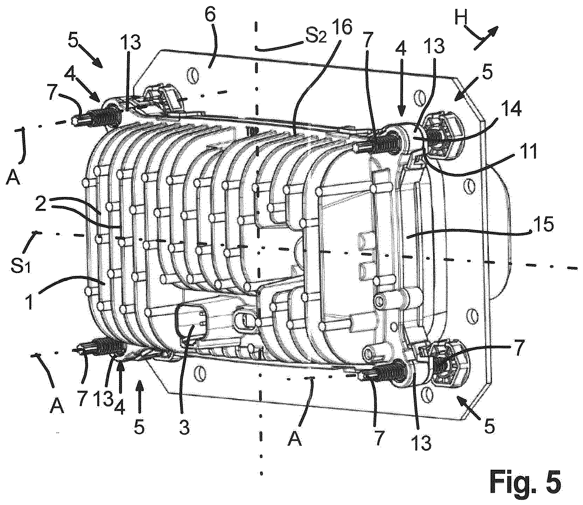

Ein Scheinwerfer für Fahrzeuge weist ein Gehäuse auf, in dem eine Lichtquelle und eine Optikeinheit angeordnet sind zur Erzeugung einer vorgegebenen Lichtverteilung. Der Scheinwerfer ist in einem Bugbereich des Fahrzeugs angeordnet. Beispielsweise kann die Lichtquelle und/oder die Optikeinheit derart angesteuert werden, dass eine Abblendlichtverteilung oder beispielsweise eine Nebellichtverteilung erzeugt wird. Gegebenenfalls könnte auch eine Fahrtrichtungsanzeigelichtfunktion erzeugt werden. In Figur 5 ist eine Rückseite der Optikeinheit dargestellt, die durch einen Kühlkörper 1 gebildet ist. Der Kühlkörper 1 weist eine Mehrzahl von entgegen einer Hauptabstrahlrichtung H des Scheinwerfers abragende Kühlrippen 2 auf. Der Kühlkörper 1 weist untenseitig eine Öffnung 3 auf zum Einsetzen der Lichtquelle. Der Kühlkörper 1 ist rechteckförmig ausgebildet und ist in Eckbereichen 4 über eine Einstelleinrichtung 5 jeweils linear verschieblich zu einem fest mit dem Gehäuse verbundenen Tragrahmen 6 gekoppelt.

Die Einstelleinrichtung 5 weist jeweils eine linear geführte Spindelschraube 7 auf, die an einem Ende über das Kugelgelenk 8 mit dem Tragrahmen 6 verbunden ist. Das Kugelgelenk 8 kann durch eine Pfannenaufnahme 9 des Tragrahmens 6 und einen Kugelkopf der Spindelschraube 7 gebildet sein. Der Kugelkopf der Spindelschraube 7 ist in üblicher Weise in der Pfannenaufnahme 9 verdrehbar gelagert.

Die Spindelschraube 7 weist einen Gewindeschaft 10 auf, der in der Montagestellung in Gewindeeingriff mit einem als Rastkörper 11 ausgebildet Aufnahmeteil steht, wobei der Rastkörper 11 fest mit einem eine Bohrung 12 aufweisenden Befestigungsteil 13 der Optikeinheit bzw. des Kühlkörpers 1 verbunden ist. Die Spindelschraube 7 ist um eine Drehachse A, die zugleich eine Symmetrieachse der Spindelschraube 7 bildet, drehbar in dem Rastkörper 11 gelagert, so dass in Abhängigkeit von der Betätigung einer oder mehrerer der an den vier Befestigungsstellen angeordneten Spindelschrauben 7 die Optikeinheit um eine horizontale Schwenkachse S1 und/oder vertikale Schwenkachse S2 relativ zu dem Gehäuse verschwenkt werden kann.

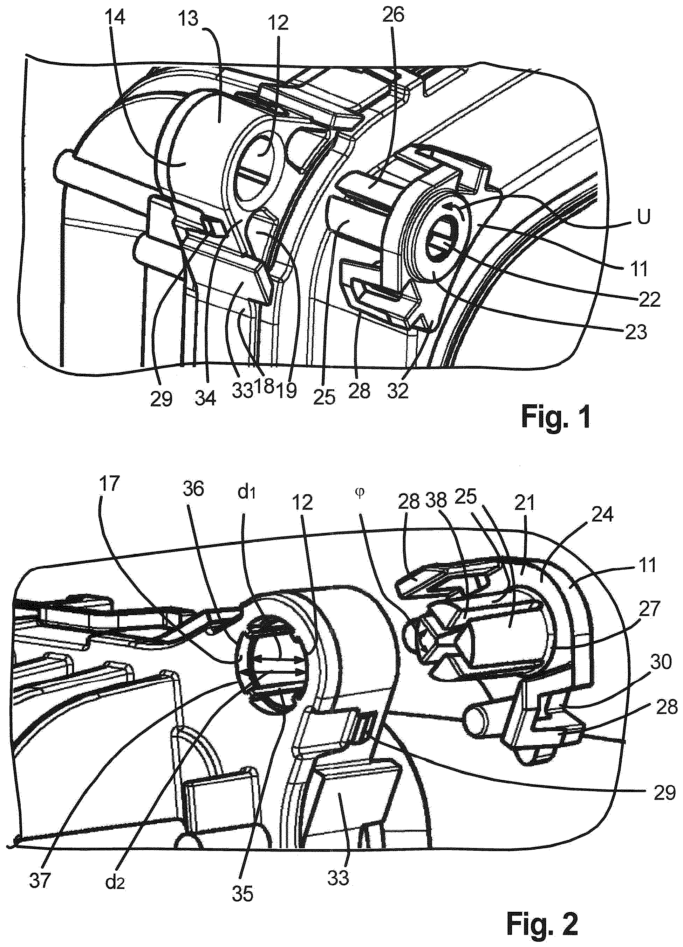

Wie besser aus den Figuren 1 und 2 ersichtlich ist, ist das Befestigungsteil 13 in den Eckbereichen 4 des Kühlkörpers 1 angeordnet, wobei das Befestigungsteil 13 ausladend angeordnet ist mit einer bogenförmigen Außenwandung 14, die sich von einem vertikalen Rand 15 des Kühlkörpers 1 zu einem rechtwinklig zu demselben verlaufenden horizontalen Rand 16 des Kühlkörpers 1 erstreckt. Die Außenwandung 14 überstreicht hierbei einen überstumpfen Winkel. In dem Bogen der Außenwandung 14 ist die Bohrung 12 angeordnet mit einer hohlzylinderförmigen Innenwandung 17. Zwischen einem Fuß 18 der Außenwandung 14 und der Bohrung 12 ist eine taschenförmige Aufnahme 19 angeordnet zum Einsetzen eines Befestigungssteges des Rastkörpers 11.

Der Rastkörper 11 weist ein Basiselement 21 auf. Von einer Vorderseite 23 des Basiselementes 21 her wird die Spindelschraube 7 in den Rastkörper 11 bzw. in die Durchgangsbohrung 22 desselben eingesetzt. Auf eine zu der Vorderseite 23 gegenüberliegenden Rückseite 24 des Basiselementes 23 ragen eine Mehrzahl von Rast- und/oder Befestigungsmittel ab.

Zum einen ragen von der Rückseite 24 des Basiselementes 21 eine Anzahl von Spreizelementen 25 ab, die in der Montagestellung an der Innenwandung 17 des Befestigungsteils 13 anliegen. Im vorliegenden Ausführungsbeispiel sind vier gleich ausgebildete Spreizelemente 25 vorgesehen, die sich jeweils in Umfangsrichtung U des Rastkörpers 11 einen Umfangswinkel φ in einem Bereich kleiner als 90° erstrecken. Die Spreizelemente 25 sind jeweils kuchenstückartig ausgebildet und weisen eine kreisringausschnittförmige Umfangsfläche 26 auf, die an der Innenwandung 17 des Befestigungsteils 13 zur Anlage kommt. Die Spreizelemente 25 sind jeweils und ausschließlich an der Rückseite 24 des Basiselementes 21 mit demselben einstückig verbunden. Quer zur Drehachse A sind die Spreizelemente 25 somit beweglich bzw. federnd ausgebildet. Die Spreizelemente 25 schließen sich unmittelbar an einem Rand 27 der Durchgangsbohrung 22 an.

In einem im Vergleich zu den Spreizelementen 25 größeren radialen Abstand erstrecken sich zwei gegenüberliegende federnde Rastelemente 28 von der Rückseite 24 des Basiselementes 21 als Rast- und/oder Befestigungsmittel. Die federnden Rastelemente 28 wirken mit einer an der Außenwandung 14 des Befestigungsteils 13 angeordneten Rastnase 29 zusammen, so dass der an dem Befestigungsteil 13 befestigte Rastkörper 11 in Richtung der Achse A rastend fixiert ist. Die federnden Rastelemente 28 sind durch Schlaufen am äußeren Umfangsrand des Rastkörpers 11 gebildet, die mit ihrer Ausnehmung 30 die Rastnase 29 widerhakenförmig hintergreifen.

Darüber hinaus ragt von der Rückseite 24 des Basiselementes 21 her als Rast-/Befestigungsmittel eine Anzahl von Befestigungsstegen ab, die in der Montagestellung jeweils in die taschenförmige Aufnahme 19 des Befestigungsteils 13 eingreifen. Im vorliegenden Ausführungsbeispiel sind die Befestigungsstege zylinderförmig und/oder bogenförmig mit einer Verjüngung zu einem freien Ende ausgebildet, wobei sie in der Montagestellung klemmend in der taschenförmigen Aufnahme 19 angeordnet sind.

Alternativ oder zusätzlich können die Befestigungsstege auch durch Klebemittel in der taschenförmigen Aufnahme 19 des Befestigungsteils 13 fixiert sein.

Der Rastkörper 11 weist an dem Basiselement 21 zusätzlich eine in der Ebene des Basiselementes 21 verlaufende Ausbeulung 32 auf, die in der Montagestellung an einem Anschlagbacken 33 des Befestigungsteils 13 anliegt zur Bildung einer Verdrehsicherung des Rastkörpers 11 relativ zu dem Befestigungsteil 13. Der Anschlagbacken 33 des Befestigungsteils 13 verläuft in einem zu dem Fuß 18 nahen Bereich und ist gegenüber der Außenwandung 14 etwas zurückgesetzt angeordnet, so dass die Ausbeulung 32 des Rastkörpers 11 gegen den Anschlagbacken 33 anschlagen kann.

Zusätzlich bildet die Rückseite 24 des Basiselementes 21 einen Anschlag für das Befestigungsteil 13, wobei die Rückseite 24 des Basiselementes 21 flächig an einer stirnseitigen Vorderseite 34 des Befestigungsteils 13 anliegt.

Zusätzlich kann die Innenwandung 17 der Bohrung 12 des Befestigungsteils 13 Stützrippen 35 aufweisen, die sich in Axialrichtung erstrecken. Auf diese Weise kann das Einsetzen der Spreizelemente 25 des Rastkörpers 11 in die Bohrung 12 des Befestigungsteils 13 vereinfacht werden. Die Stützrippen 35 können als Verdrehschutz dienen, so dass beim Einsetzen der Spindelschraube 7 in die Durchgangsbohrung 22 des rastend mit dem Befestigungsteil 13 verbundenen Rastkörpers 11 nicht die Spreizelemente 25 abreißen. Zu diesem Zweck weisen die in Umfangsrichtung U benachbart angeordnete Spreizelemente 25 in einem Ausgangszustand vor dem Eingreifen in die Bohrung 12 des Befestigungsteils 13 einen solchen Abstand zueinander auf, dass zueinander gekehrte Radialseiten 38 der benachbarten Spreizelemente 25 beim Einsetzen des Rastkörpers 11 in die Bohrung 12 des Befestigungsteils 13 entlang der axialen Stützrippe 35 geführt werden.

Im Bereich einer Rückseite 36 der Bohrung 12 des Befestigungsteils 13 ist ein Endbereich 37 vorgesehen, der im Vergleich zu einem Durchmesser d₁ eines dem restlichen Bereichs der Bohrung 12 einen vergrößerten Durchmesser d₂ aufweist. Vorteilhaft wird hierdurch ein Ausziehschutz des Rastkörpers 11 gewährleistet.

Im Folgenden wird das Verbringen des Rastkörpers 11 in die Montagestellung zu dem Befestigungsteil 13 beschrieben. In einem ersten Schritt wird der Rastkörper 11 unter Eingreifen der Spreizelemente 25 in die Bohrung 12 des Befestigungsteils 13 eingesteckt, wobei die Befestigungsstege jeweils in die taschenförmigen Aufnahmen eingreifen und das federnde Rastelement 28 die Rastnase 29 des Befestigungsteils 13 hintergreift. Der Rastkörper 11 ist lagesicher und vibrationsfrei mit dem Befestigungsteil 13 verbunden.

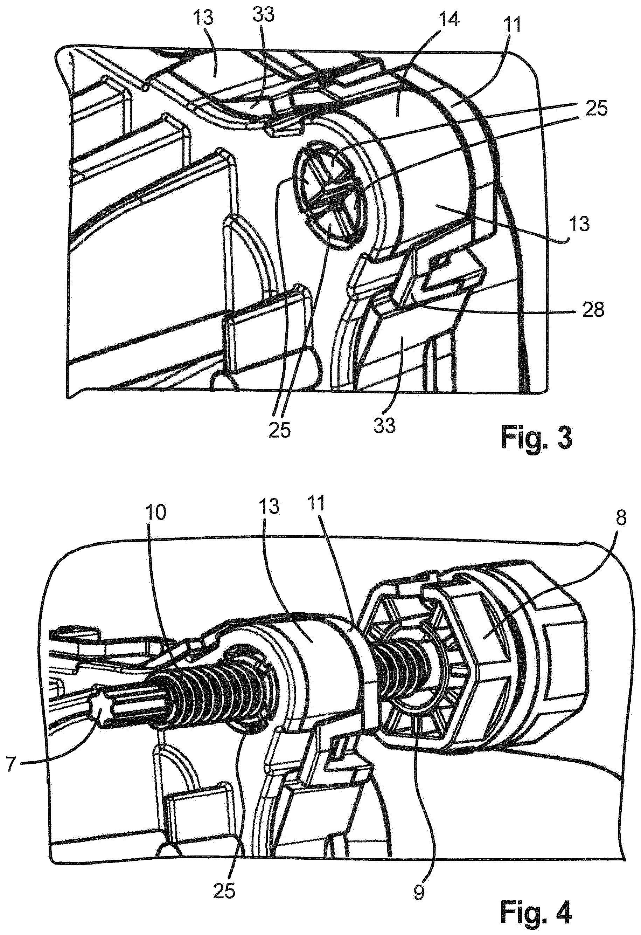

In einem weiteren Schritt wird von der Vorderseite des Rastkörpers 11 her die Spindelschraube 7 in die Durchgangsbohrung 22 des Rastkörpers 11 eingesetzt, wobei beim erstmaligen Einsetzen vorzugsweise ein Gewinde auf einer Innenseite der Spreizelemente 25 geschnitten wird. Nach erfolgtem Einschneiden des Gewindes sind die Spreizelemente 25 jeweils kreisringausschnittförmig ausgebildet, wie aus Figur 4 zu ersehen ist.

In einem weiteren Schritt erfolgt nun die Verbindung der Spindelschraube 7 über das Kugelgelenk 8 mit dem Tragrahmen 6.

Durch Betätigen bzw. Verdrehen der Spindelschraube 7 an einem freien Ende desselben beispielsweise mittels eines Werkzeugs, kann nun die Optikeinheit bzw. der Kühlkörper 1 an den Befestigungsstellen relativ zu dem Tragrahmen 6 linear verstellt werden.

Vorzugsweise besteht der Rastkörper 11 aus einem Kunststoffmaterial. Das Befestigungsteil 13 besteht wie der Kühlkörper 1 vorzugsweise aus einem Metallmaterial. Vorzugsweise besteht das Befestigungsteil 13 und der Kühlkörper 1 aus einem metallischen Druckgießmaterial, beispielsweise als ein Aluminium-Druckgießteil. Der Kühlkörper 1 ist vorzugsweise einstückig mit dem Befestigungsteil 13 verbunden. Die Spindelschraube 7 kann aus einem Kunststoffmaterial bestehen.

### Bezugszeichenliste

- 1: Kühlkörper
- 2: Kühlrippe
- 3: Öffnung
- 4: Eckbereich
- 5: Einstelleinrichtung
- 6: Tragrahmen
- 7: Spindelschraube
- 8: Kugelgelenk
- 9: Pfannenaufnahme
- 10: Gewindeschaft
- 11: Rastkörper
- 12: Bohrung
- 13: Befestigungsteil
- 14: Außenwandung
- 15: vertikaler Rand
- 16: horizontaler Rand
- 17: Innenwandung
- 18: Fuß
- 19: taschenförmige Aufnahme
- 21: Basiselement
- 22: Durchgangsbohrung
- 23: Vorderseite
- 24: Rückseite
- 25: Spreizelement
- 26: Umfangsfläche
- 27: Rand
- 28: Rastelement
- 29: Rastnase
- 30: Außenwandung
- 32: Ausbeulung
- 33: Anschlagbacken
- 34: stirnseitige Vorderseite
- 35: Stützrippen
- 36: Rückseite
- 37: Endbereich
- 38: Radialseite
- d₂: Durchmesser
- H: Hauptabstrahlrichtung
- φ: Umfangswinkel
- A: Drehachse
- S1,S2: Schwenkachse
- U: Umfangsrichtung

## Patentansprüche

1. Scheinwerfer für Fahrzeuge mit einem Gehäuse, in dem eine Lichtquelle und eine Optikeinheit angeordnet sind zur Erzeugung einer vorgegebenen Lichtverteilung, wobei die Optikeinheit über eine Einstelleinrichtung (5) bezüglich einer horizontalen und/oder vertikalen Achse (S1, S2) verstellbar angeordnet ist, wobei die Einstelleinrichtung (5) eine Spindelschraube (7) umfasst, die über ein Kugelgelenk (8) mit dem Gehäuse oder einem an dem Gehäuse befestigten Tragrahmen (6) gekoppelt ist und die mit einem Gewindeschaft (10) um eine Drehachse (A) in einem Gewindeeingriff steht mit einem Aufnahmeteil (11), wobei das Aufnahmeteil (11) einsteckbar in eine einstückig mit der Optikeinheit verbundenen Befestigungsteil (13) ausgebildet ist, und wobei das Aufnahmeteil (11) als ein Rastkörper mit einem senkrecht zur Drehachse (A) verlaufenden Basiselement (21) und einer Mehrzahl von von dem Basiselement (21) abragenden Rast- und/oder Befestigungsmitteln (25, 28, 32) ausgebildet ist, wobei von dem Basiselement (21) des Rastkörpers (11) als Rastmittel eine Anzahl von Spreizelementen (25) abragt, die in der Montagestellung an einer Innenwandung (17) des Befestigungsteils (13) anliegen, **dadurch gekennzeichnet, dass** von dem Basiselement (21) des Rastkörpers (11) als Rastmittel ein federndes Rastelement (28) abragt, das in der Montagestellung rastend mit einer von einer Außenwandung (30) des Befestigungsteils (13) abragenden Rastnase (29) verbunden ist, so dass der an dem Befestigungsteil (13) befestigte Rastkörper (11) in Richtung der Drehachse (A) rastend fixiert ist.

2. Scheinwerfer nach Anspruch 1 , **dadurch gekennzeichnet, dass** das Basiselement (21) des Rastkörpers (11) eine in der Ebene des Basiselementes (21) verlaufenden Ausbeulung (32) aufweist, die in der Montagestellung an einem Anschlagbacken (33) des Befestigungsteils (13) anliegt zur Bildung einer Verdrehsicherung des Rastkörpers (11).

3. Scheinwerfer nach Anspruch 1 oder 2, **dadurch gekennzeichnet, dass** das Befestigungsteil (13) eine Bohrung (12) aufweist mit einer Innenwandung (17), die axiale Stützrippen (35) aufweist.

4. Scheinwerfer nach einem der Ansprüche 1 bis 3, **dadurch gekennzeichnet, dass** die Innenwandung (17) der Bohrung (12) in einem dem Basiselement (21) abgewandten Endbereich (37) einen Endabschnitt mit einem vergrößerten Durchmesser (d₂) aufweist im Vergleich zu dem Durchmesser (d₁) des weiteren Bereiches der Bohrung (12), der dem Basiselement (21) des Rastkörpers (11) zugewandt ist.

5. Scheinwerfer nach einem der Ansprüche 1 bis 4, **dadurch gekennzeichnet, dass** das Spreizelement (25) ausschließlich stirnseitig mit dem Basiselement (21) des Rastkörpers (11) verbunden ist.

6. Scheinwerfer nach einem der Ansprüche 1 bis 5, **dadurch gekennzeichnet, dass** das Spreizelement (25) sich in einem Umfangswinkel (φ) des Rastkörpers (11) in einem Winkelbereich von kleiner 90° erstreckt.

7. Scheinwerfer nach einem der Ansprüche 1 bis 6, **dadurch gekennzeichnet, dass** eine Mehrzahl von gleich ausgebildeten Spreizelementen (25) in Umfangsrichtung (U) versetzt zueinander angeordnet sind, wobei die Spreizelemente (25) beabstandet zueinander angeordnet sind.

8. Scheinwerfer nach einem der Ansprüche 1 bis 7, **dadurch gekennzeichnet, dass** eine Umfangsfläche der Spreizelemente (25) kreisringausschnittförmig ausgebildet ist.

9. Scheinwerfer nach einem der Ansprüche 1 bis 8, **dadurch gekennzeichnet, dass** die Spreizelemente (25) derart ausgebildet sind, dass durch Eingreifen der Spindelschraube (7) in die Durchgangsbohrung (22) des in der Montagestellung befindlichen Rastkörpers (11) ein Gewinde auf einer Innenseite der Spreizelemente (25) geschnitten wird.

10. Scheinwerfer nach einem der Ansprüche 1 bis 9, **dadurch gekennzeichnet, dass** in Umfangsrichtung (U) angeordnete benachbarte Spreizelemente (25) in einem Ausgangszustand vor Eingreifen derselben in die Bohrung (12) des Befestigungsteils (13) einen solchen Abstand zueinander aufweisen, dass beim Eingreifen in die Bohrung (12) zueinander gekehrte Radialseiten (38) der benachbarten Spreizelemente (25) entlang der axialen Stützrippe (35) der Bohrung (12) geführt sind.

11. Scheinwerfer nach einem der Ansprüche 1 bis 10, **dadurch gekennzeichnet, dass** von dem Basiselement (21) des Rastkörpers (11) als Rast- und/oder Befestigungsmittel ein Befestigungssteg abragt, der in der Montagestellung in einer taschenförmigen Aufnahme (19) des Befestigungsteils (13) eingreift.

12. Scheinwerfer für Fahrzeuge nach Anspruch 11, **dadurch gekennzeichnet, dass** der Befestigungssteg in der taschenförmigen Aufnahme (19) klemmend und/oder verklebend angeordnet ist.

13. Scheinwerfer für Fahrzeuge nach einem der Ansprüche 1 bis 12, **dadurch gekennzeichnet, dass** das Befestigungsteil (13) aus einem metallischen Druckgießmaterial besteht.

## Claims

1. A vehicle headlamp with a housing in which a light source and an optical unit are arranged to generate a predetermined light distribution, said optical unit being arranged to be adjustable relative to a horizontal and/or vertical axis (S1, S2) via an adjustment device (5), said adjustment device (5) comprising a spindle screw (7)
that is coupled to the housing or to a carrier frame (6) attached to the housing by means of a ball joint (8) and that is engaged in a thread with a receiving part (11) with a threaded shaft (10) about an axis of rotation (A), said receiving part (11) being formed so that it can be inserted into a fastening part (13) connected integrally to the optical unit, and said receiving part (11) being formed as a latching body with a base element (21) extending perpendicularly to the axis of rotation (A) and a plurality of latching and/or fastening means (25, 28, 32) projecting from the base element (21), with a number of expanding elements (25) projecting from the base element (21) of the latching body (11) as latching means that in installed position are in contact with an inner wall (17) of the fastening part (13), **characterised in that** a spring-loaded latching element (28) projects from the base element (21) of the latching body (11) as a latching means which, in installed position, is connected in a latching manner to a latching lug (29) projecting from an outer wall (30) of the fastening part (13) so that the latching body (11) attached to the fastening part (13) is latched and fixed in the direction of the axis of rotation (A).

2. A headlamp according to Claim 1, **characterised in that** the base element (21) of the latching body (11) has a bulge (32) extending in the plane of the base element (21) which, in the installed position, is in contact with a stop jaw (33) of the fastening part (13) to form a twist lock for the latching body (11).

3. A headlamp according to Claim 1 or 2, **characterised in that** the fastening part (13) has a bore (12) with an inner wall (17) that has axial supporting ribs (35).

4. A headlamp according to one of Claims 1 to 3, **characterised in that** in an end region (37) facing away from the base element (21), the inner wall (17) of the bore (12) has an end section with a larger diameter (d₂) compared with the diameter (d₁) of the other region of the bore (12) facing the base element (21) of the latching body (11).

5. A headlamp according to one of Claims 1 to 4, **characterised in that** the expanding element (25) is connected to the base element (21) of the latching body (11) only at the front end.

6. A headlamp according to one of Claims 1 to 5, **characterised in that** the expanding element (25) extends in a circumferential angle (φ) of the latching body (11) in an angle range of less than 90°.

7. A headlamp according to one of Claims 1 to 6, **characterised in that** a plurality of identically formed expanding elements (25) are arranged offset from one another in the circumferential direction (U) with the expanding elements (25) being arranged at a distance from one another.

8. A headlamp according to one of Claims 1 to 7, **characterised in that** a circumferential surface of the expanding elements (25) is formed in the shape of an annular recess.

9. A headlamp according to one of Claims 1 to 8, **characterised in that** the expanding elements (25) are formed in such a way that when the spindle screw (7) engages in the through hole (22) of the latching body (11) in installed position, a thread is cut on an inner side of the expanding elements (25).

10. A headlamp according to one of Claims 1 to 9, **characterised in that** expanding elements (25) arranged adjacently in circumferential direction (U) have a distance between them in an initial state before they engage in the bore (12) of the fastening part (13) such that, when they engage in the bore (12), the radial sides (38) of the adjacent expanding elements (25) facing each other are guided along the axial support rib (35) of the bore (12).

11. A headlamp according to one of Claims 1 to 10, **characterised in that** a fastening web projects from the base element (21) of the latching body (11) as a latching and/or fastening means
which,
in the installed position, engages in a pocket-shaped recess (19) of the fastening part (13).

12. A vehicle headlamp according to Claim 11, **characterised in that**
the fastening web
is arranged in the pocket-shaped recess (19)
where it is clamped and/or glued.

13. A vehicle headlamp according to one of Claims 1 to 12, **characterised in that** the fastening part (13) is made of a metallic die-cast material.

## Revendications

1. Projecteur de véhicule avec un boîtier dans lequel sont disposées une source de lumière et une unité optique pour générer une répartition de lumière prédéfinie, l'unité optique étant disposée par rapport à un axe horizontal et/ou vertical (S1, S2) de manière à pouvoir être réglée à l'aide d'un dispositif de réglage (5),
le dispositif de réglage (5) comprenant une vis à broche (7) couplée au boîtier ou à un cadre de support (6) fixé au boîtier par l'intermédiaire d'une articulation à rotule (8) et en prise par vissage avec une pièce de réception (11) autour d'un axe de rotation (A) à l'aide d'une tige filetée (10), la pièce de réception (11) étant conçue de manière à pouvoir être insérée dans une pièce de fixation (13) reliée d'un seul tenant à l'unité optique, et la pièce de réception (11) étant conçue comme un corps d'encliquetage avec un élément de base (21) s'étendant perpendiculairement à l'axe de rotation (A) et plusieurs moyens d'encliquetage et/ou de fixation (25, 28, 32) s'étendant à partir de l'élément de base (21) du corps d'encliquetage (11), plusieurs éléments d'écartement (25) dépassant de l'élément de base (21) du corps d'encliquetage s'appuyant en position de montage contre une paroi intérieure (17) de la pièce de fixation (13), **caractérisé en ce qu'**un élément d'encliquetage élastique (28) dépasse de l'élément de base (21) du corps d'encliquetage (11) comme moyen d'encliquetage, l'élément d'encliquetage étant relié par encliquetage, en position de montage, à un ergot d'encliquetage (29) dépassant d'une paroi extérieure (30) de la pièce de fixation (13), de sorte que le corps d'encliquetage (11) fixé à la pièce de fixation (13) est fixé par encliquetage dans la direction de l'axe de rotation (A).

2. Projecteur selon la revendication 1 **caractérisé en ce que** l'élément de base (21) du corps d'encliquetage (11) présente une protubérance (32) s'étendant dans le plan de l'élément de base (21) et reposant, en position de montage, contre une mâchoire de butée (33) de la pièce de fixation (13) pour former un dispositif nait-rotation du corps d'encliquetage (11).

3. Projecteur selon la revendication 1 ou 2 **caractérisé en ce que** la pièce de fixation (13) présente un alésage (12) avec une paroi intérieure (17) qui comporte des nervures d'appui axiales (35).

4. Projecteur selon l'une des revendications 1 à 3 **caractérisé en ce que** la paroi intérieure (17) de l'alésage (12) présente au niveau d'une extrémité (37) opposée à l'élément de base (21) une extrémité avec un diamètre agrandi (d₂) par rapport au diamètre (d₁) de la partie plus large de l'alésage (12) tournée vers l'élément de base (21) du corps d'encliquetage (11).

5. Projecteur selon l'une des revendications 1 à 4 **caractérisé en ce que** l'élément d'écartement (25) est exclusivement relié à l'élément de base (21) du corps d'encliquetage (11) par sa face frontale.

6. Projecteur selon l'une des revendications 1 à 5 **caractérisé en ce que** que l'élément d'écartement (25) s'étend dans un angle circonférentiel (φ) du corps d'encliquetage (11) dans une plage angulaire inférieure à 90°.

7. Projecteur selon l'une des revendications 1 à 6 **caractérisé en ce que** plusieurs éléments d'écartement (25) de même conception sont disposés de manière décalée les uns par rapport aux autres dans le sens circonférentiel (U), les éléments d'écartement (25) étant espacés les uns des autres.

8. Projecteur selon l'une des revendications 1 à 7 **caractérisé en ce qu'**une surface périphérique des éléments d'écartement (25) est en forme de segment circulaire.

9. Projecteur selon l'une des revendications 1 à 8 **caractérisé en ce que** les éléments d'écartement (25) sont conçus de telle sorte que, lorsque la vis à broche (7) s'engage dans le trou traversant (22) du corps d'encliquetage (11) se trouvant en position de montage, un filetage est taillé sur une face intérieure des éléments d'écartement (25).

10. Projecteur selon l'une des revendications 1 à 9 **caractérisé en ce que** les éléments d'écartement (25) adjacents disposés dans le sens circonférentiel (U) présentent, dans un état initial avant leur engagement dans l'alésage (12) de la pièce de fixation (13), un écartement tel que, lors de leur engagement dans l'alésage (12), les côtés radiaux (38) des éléments d'écartement (25) adjacents se font face le long de la nervure d'appui axiale (35) de l'alésage (12).

11. Projecteur selon l'une des revendications 1 à 10 **caractérisé en ce qu'**une nervure de fixation dépasse de l'élément de base (21) du corps d'encliquetage (11) en tant que moyen d'encliquetage et/ou de fixation
qui, en position de montage, s'engage dans une pièce de réception (19) de la pièce de fixation (13).

12. Projecteur de véhicule selon la revendication 11 **caractérisé en ce que**
la nervure de fixation
est maintenue dans la pièce de réception (19)
par serrage et/ou collage.

13. Projecteur de véhicule selon l'une des revendications 1 à 12 **caractérisé en ce que** la pièce de fixation (13) est constituée d'un matériau métallique moulé sous pression.
